# EUROPÄISCHE PATENTANMELDUNG

(11) **EP 1 489 055 A2**
(43) Veröffentlichungstag der Anmeldung: **22.12.2004**
(21) Anmeldenummer: 04010965.4
(22) Anmeldetag: 07.05.2004
(51) Int. Cl.: C04B 14/20, C01B 33/42

(54) **Verfahren zur chemischen Delamination von Glimmer**

(30) Priorität: 20.06.2003 DE 10327627
(71) Anmelder: Forschungszentrum Karlsruhe GmbH, 76133 Karlsruhe (DE)
(72) Erfinder: Friedrich, Frank, 76185 Karlsruhe (DE); Nüesch, Rolf, Prof. Dr., 76137 Karlsruhe (DE); Weidler, Peter, Dr., 76297 Stutensee (DE)
(74) Vertreter: Fitzner, Uwe, Dr.

(57) **Zusammenfassung**

Verfahren zur chemischen Delamination von Glimmer, wobei der Glimmer mit mindestens einem Salz mindestens eines zwei- oder mehrwertigen Metallkations bei einer Temperatur > 100 °C und einem Druck > 10⁵ Pa umgesetzt wird und ein nach diesem Verfahren delaminierter Glimmer.

## Beschreibung

Die Erfindung betrifft ein Verfahren zur chemischen Delamination von Glimmer und chemisch delaminierter Glimmer erhältlich nach diesem Verfahren.

Glimmer zählt zu den Dreischichtsilikaten, deren charakteristische Eigenschaft der lagige der Aufbau ihrer Schichtstapel ist.

Aus Pegmatiten gewonnener tafeliger Muskovit und Phlogopit als Tafel-Glimmer oder Blatt-Glimmer sowie als Glimmer-Abfälle oder Mikanit (Preß-Glimmer) wird z. B. wegen der sehr geringen elektrischen Leitfähigkeit und der hohen Beständigkeit bei Hitzeschock in der Elektrotechnik (u. a. als Isolatoren) und in der Elektronik-Industrie verwendet. Glimmer-Abfälle und Glimmer-Schiefer als trocken gemahlener Glimmer werden beispielsweise auch für Dachpappe, in der Feuerschutz-Industrie, in Fugenzementen für Fasergipsplatten und als Zusatz für Bohrspülungen, als naß gemahlener Glimmer für Farben, und Edelputze und als Füllstoff in Plastikwaren zugesetzt. Verbundpigmente aus Glimmer und Titandioxid können ferner als Perlglanzpigmente dienen (Römpp Lexikon Chemie - CDROM Version 2.0, Stuttgart/New York: Georg Thieme Verlag 1999).

Besonders wichtig für die technische Verwendung dieser Minerale ist ein hohes Aspektverhältnis (Durchmesser/Dicke) der einzelnen Schichtpakete, das durch die Trennung der gestapelten Schichten von voneinander (Delamination) erhöht werden kann.

Rein mechanische Verfahren zur Delamination von Glimmer sind z. B. den US 5,797,547, 6,436,523 und 5,137,217 zu entnehmen. Bei den darin beschriebenen Verfahren werden die Mineralblättchen (Schichtpakete) im Luftstrom durch Zylinder oder Trommeln geleitet, in denen sie mechanisch von Schaufeln, Rotoren usw. durch die auftretenden Scherkräfte delaminiert werden.

Zusätzlich ist es aber gewünscht die chemischen Eigenschaften der Glimmer durch Austausch der Zwischenschichtkationen zu verändern. Allerdings verhindern die Schichtstruktur und die Art der chemischen Bindungen zwischen den Schichten bzw. Schichtpaketen ein einfaches Trennen der Schichten bzw. Pakete und die gleichzeitige chemische Modifizierung.

Die US 3,770,651 offenbart ein chemisches Verfahren zur Delamination von Glimmer durch Verwendung von Salzschmelzen aus Alkali-, Erdalkali-, Cer- oder Zinkhalogeniden bei Temperaturen zwischen 500 und 1000 °C, bei dem neben der Delamination auch mindestens ein Teil der Zwischenschichtkationen ersetzt wird. Allerdings wir die Struktur des Glimmers durch dieses Verfahrenstark geschädigt, da die verwendeten sehr hohen Temperaturen in dessen Dehydratationsbereich (850 - 920 °C) liegen.

Caseri et al. (Colloid Polym Sci. 270, S. 392 - 398, 1992) beschreiben die Delamination von Muskovit mittels übersättigter Lithiumnitrat Lösungen bei Temperaturen zwischen 130 °C und 180 °C unter Normaldruck. Mit dem vorgestellten Verfahren gelingt zwar die Delamination, jedoch nur unter Verwendung von Lithiumkationen, die auch zum Teil die Zwischenschichtkationen ersetzen. Mit anderen zwei- oder mehrwertigen Metallkationen bzw. deren Nitratsalzen verläuft die Delamination und entsprechend der Kationenaustausch nicht oder nur ungenügend. Ein hoher Delaminationsgrad oder Kationenaustausch beim Einsatz von zweioder mehrwertigen Metallkationen an sich ist nicht offenbart.

Aus der US 6,114,269 ist ein Verfahren bekannt, bei dem die trioktaedrischen Glimmer Biotit und Phlogopit bei Temperaturen bis 180 °C mit wässrigen Lösungen von Natriumsalzen in Autoklaven umgesetzt werden, um chemisch modifizierte Glimmer herzustellen, die sich als Ionenaustauscher für Caesium-Ionen eignen. Die Delamination oder der Einsatz von zwei- oder mehrwertigen Metallkationen an sich ist nicht offenbart und kann, wie die vorliegende Anmeldung zeigt, unter den angegebenen Bedingungen nicht erfolgen, da Natriumsalze nicht zur Delamination einsetzbar sind. Lediglich der Einbau von Zirconiumbeinhaltende Kationen bei Temperaturen von bis zu 100 °C bei Normaldruck wird beschrieben, um die Affinität für (radiaktives) Caesium zu erhöhen. Reine zwei- oder mehrwertige Metallkationen werden nicht verwendet.

Aufgabe der vorliegenden Erfindung ist es, ein Verfahren zur chemischen Delamination bereitzustellen, bei dem neben der Delamination gleichzeitig auch ein Austausch von zwei- oder mehrwertigen Metallkationen im Glimmer möglich ist.

Diese Aufgabe wird durch das Verfahren nach Anspruch 1 gelöst.

Dadurch, dass bei dem Verfahren zur chemischen Delamination von Glimmer, der Glimmer mit mindestens einem Salz von zwei- oder mehrwertigen Metallkationen bei einer Temperatur > 100 °C und einem Druck > 10⁵ Pa umgesetzt wird, ist es erfindungsgemäß möglich neben der Delamination des Glimmers auch einen Austausch der Zwischenschichtkationen zu erzielen und so die chemischen Eigenschaften des Glimmer zu verändern.

Mit dem erfindungsgemäßen Verfahren ist es erstmals möglich eine größere Anzahl von zwei- oder mehrwertigen Metallsalze zur Interkalation und anschließenden chemischen Delamination von Glimmer einzusetzen. Dies ist von großem Vorteil, da kostengünstigere Metallsalze nun einsetzbar sind.

Bei dem erfindungsgemäßen Verfahren werden also zunächst zwei- oder mehrwertige Kationen in die Zwischenschichten der Glimmer interkaliert und führen dann zu einer Delamination.

Unter Glimmer werden in der vorliegenden Anmeldung die zu den Phyllo-Silicaten (Blattsilicaten) gehörenden Tonerde-Silicate der allgemeinen Glimmer Formel verstanden:

W(X,Y)₂₋₃[(OH,F)₂/Z₄O₁₀];

mit W = K, Na, seltener Ca, noch seltener Ba, Rb und Cs; (X,Y) = je zwei Ionen von AI, Mg und/oder Fe oder Li, Mn, Cr und Ti; Z = gewöhnlich Si und AI, aber auch Fe oder Ti.
Die eingesetzten Glimmer können natürlicher Herkunft oder synthetisch hergestellt sein. Als Glimmer können trioktaedrischer (z. B. Biotit, Phlogopit) und/oder dioktaedrischer Glimmer (z. B. Muskovit, Paragonit, Margarit) verwendet werden.

Bevorzugt wird der Glimmer aus der Gruppe dioktaedrischen Glimmer ausgewählt. Besonders bevorzugt wird als Glimmer Muskovit, Paragonit oder Margarit eingesetzt. Ganz besonders bevorzugt handelt es sich um Muskovit.

Unter Delamination von Glimmer wird die Trennung der einzelnen Schichtstapel bzw. Schichten voneinander verstanden, so dass sich deren Aspektverhältnis und spezifische Oberfläche erhöhen. Zudem nimmt die mittlere Korngröße der Glimmerteilchen dabei ab.

Als Metallkationen im Sinne der Erfindung werden zwei- oder mehrwertige Metallkationen eingesetzt, wobei die Metalle als reine zwei- oder mehrwertige Ionen verwendet werden. Es sollen z. B. keine gemischten Kationen aus Metallen und Oxiden eingesetzt werden.

Vorzugsweise werden Metallkationen aus der Gruppe bestehend aus Aluminium, Kupfer, Magnesium, Zink, Barium ausgewählt.

Es ist ferner bevorzugt, wenn das Salz der Metallkationen als wäßrige Lösung eingesetzt wird. In diesem Zusammenhang sollte das Salz sehr gut löslich sein.

Vorzugsweise ist das Metallkationsalz ein Nitrat.

Besonders bevorzugt wird das Metallkationsalz in Form einer übersättigten wässrigen Lösung eingesetzt. Dann werden mit dem erfindungsgemäßen Verfahren hervorragende Ergebnisse erzielt und die eingesetzten Flüssigkeitsmengen können gering gehalten werden, so dass wenig Abfall anfällt. Ganz besonders bevorzugt ist die übersättigte wässrige Lösung 1,6 bis 11,9-fach übersättigt.
Vorzugsweise wird bei Aluminiumnitrat eine ca. 5-fach, bei Bariumnitrat eine ca. 48-fach, bei Kupfernitrat eine ca. 1,6-fach, bei Magnesiumnitrat eine ca. 7,9-fach und bei Zinknitrat eine ca. 3,5-fach übersättigte Lösung eingesetzt.

Unter übersättigt wird im Sinne der Erfindung eine wässrige Lösung angesehen, zu der eine über die bei 20 °C und Normaldruck angegebene Löslichkeit hinausgehende Menge Salz hinzugegeben wird, welches sich unter den Verfahrensbedingungen (Temperatur und Druck) löst und somit eine im Vergleich zu diesen Bedingungen übersättigte Lösung dieses Salzes erhalten wird..

Unter Normaldruck wird erfindungsgemäß ein Druck von 10⁵ Pa verstanden, der im Rahmen der üblichen Umweltschwankungen variieren kann. Demgegenüber soll unter den Bedingungen der Erfindung ein Druck verwendet werden, der wesentlich über diesem Normaldruck liegt. Vorzugsweise liegt der Druck über 2*10⁵ Pa, 3*10⁵ Pa, 4*10⁵ Pa, 5*10⁵ Pa, 6*10⁵ Pa, 7*10⁵ Pa, 8*10⁵ Pa, 9*10⁵ Pa, 1*10⁶ Pa, 1,1*10⁶ Pa, 1,2*10⁶ Pa, 1,3*10⁶ Pa, 1,4*10⁶ Pa, 1,5*10⁶ Pa, 1,6*10⁶ Pa, 1,7*10⁶ Pa, 1,8*10⁶ Pa oder 1,9*10⁶ Pa. Bevorzugterweise liegt der Druck jedoch nicht über 2,0*10⁶ Pa.

Favorisiert sind Temperaturen bei der Umsetzung nach dem erfindungsgemäßen Verfahren unterhalb von 300 °C. Besonders günstig sind Temperaturen zwischen 130 und 190 °C, insbesondere 150 - 190 °C und ganz besonders bevorzugt 170 - 190 °C.

Das Verfahren wird günstigerweise in einem geeigneten Autoklaven durchgeführt, der einen Tefloninnenbehälter umfassen kann.

Die Erfindung umfasst ferner chemisch delaminierten Glimmer, der nach dem obigen, erfindungsgemäßen Verfahren hergestellt wurde.

Dieser weist eine besonders hohe spezifische Oberfläche und eine mittlere Korngröße der Teilchen von 30 bis 70 µm auf. Darüber hinaus besitzen die hergestellten bzw. modifizierten Glimmer eine im Vergleich zum Ausgangsmaterial verbesserte (engere) bzw. unimodale Verteilung der Korngrößen.

Ganz besonders bevorzugt handelt es sich dabei um Muskovit.

Die Erfindung wird nun anhand einiger Beispiele näher beschrieben.

### Beispiele

### Chemische Delamination von Muskovit mit zwei- oder mehrwertigen Metall-Nitratsalzen in Autoklaven

### Material

Für die Delaminationsexperimente wurde die Fraktion < 400 µm eines Muskovit der Firma Merck KgaA (Art.Nr. 2.75180.0000) verwendet.

Zur mineralogischen Phasenanalyse wurde die Röntgendiffraktometrie genutzt. Die Messungen erfolgten an einem Siemens D5000. Dazu wurde Cu K_{α}-Strahlung verwendet, bei einer Schritt-Weite 0,01° 2⊖ und einer Zählrate von 2 s pro Schritt.

Zur Untersuchung des Delaminationsgrads kann auch die Änderung der spezifischen Oberflächen der behandelten Muskovite herangezogen werden. Dazu wurde die Adsorption von Stickstoff nach der BET-Methode verwendet. Es wurde eine 7-Punkt BET durchgeführt, die Sorptionsisotherme bestand aus 40 Adsorptions- und 20 Desorptionspunkten. Die Messungen wurden mit einem Quantachrome Autosorb-1 BET durchgeführt.

Zur Abbildung von Strukturen im Nanometerbereich boten sich elektronenmikroskopische Methoden an. Besonders geeignet hierzu ist das ESEM (Environmental Scanning Electron Microscope), bei dem im Gegensatz zu herkömmlichen Elektronenmikroskopen zum Betrieb des Geräts (Philips ESEM XL 30 FEG) kein Hochvakuum in der Probenkammer nötig ist. Da mit diesem Mikroskop Wasserdampfpartialdrücke von bis zu mehreren Torr eingestellt werden können, ist es möglich feuchte und damit sehr empfindliche Minerale schonend zu untersuchen. Zudem kann auf das Bedampfen der Proben mit Gold oder Kohlenstoff verzichtet werden. Die Aufnahmen wurden mit Beschleunigungsspannungen von 15 & 20 kV im H₂O-Mode durchgeführt, der Wasserdampf-Druck betrug 1.0 Torr, bei einem Spotsize von 3.0.

### Reaktionsbehälter & Versuchsdurchführung

Zuerst wird der Muskovit in einem Teflonbehälter eines Edelstahl-Autoklaven gegeben. Anschließend wird das jeweilige Nitratsalz der Metallkationen in einem Becherglas mit dem jeweils angegebenen Volumen H₂O vermischt, in den Autoklavenbehälter gegossen und mit dem Muskovit verrührt. Der Behälter wird mit einem Dichtungsring versehen und mit einem Teflondeckel abgedeckt. Auf diesen wird eine Abdeckplatte aus Edelstahl aufgesetzt und abschließend der Deckel aufgeschraubt. Die Autoklaven wurden dann im vorgeheizten Trockenschrank auf Temperaturen bis zu 190 °C aufgeheizt. (genaue Temperaturangaben siehe 1 - 7).

Nach Ende des Versuchs werden die Autoklaven 20 Min. in einem Wasserbad bei 20 °C abgekühlt. Anschließend wird die Probensuspension durch Zugabe von H₂O-bidest auf ein Volumen von 200 ml gebracht und mit einer Vakuum-Pumpe über Zellulose-Nitrat-Filtern (Porengröße: 0,45 Mm, Fa. Sartorius) abfiltriert. Der Filterkuchen wird abschließend mit 400 ml H₂O gewaschen und 24 Std. bei 60°C getrocknet. Durch diese Prozedur erhält man ein sehr feinkörniges, silbrig glänzendes Pulver.

Die Autoklavenversuche wurden jeweils mit 200 mg Muskovit und Lösungen von AI-, Ba-, Cu-, Li-, Mg-, Na- und Zn-Nitraten durchgeführt.

Um die Ergebnisse des erfindungsgemäßen Verfahrens mit dem Stand der Technik zu vergleichen, wurden für die Autoklavenbehandlung des Muskovits Lithiumnitrat verwendet und zwar so, wie er von Caseri et al. in offenen, drucklosen Systemen zur erfolgreichen Delamination von Muskovit verwendet wurde.

Da immer Natrium neben Kalium in geringen Anteilen in den Zwischenschichten der Glimmer vorhanden ist, führt die Behandlung mit Natriumsalzen (NaNO₃) nicht zu einer Veränderung des Ausgangsmaterials. Lithium- und Natriumsalze dienten daher als Referenzsubstanzen.

Die eingesetzten Salze (Merck) wiesen folgende Löslichkeiten (von Merck angegeben) und deren Lösungen folgende Konzentrationen auf:

| Metallkationsalz | Art.-Nr. | Löslichkeit bei 20 °C [g/L] | Konzentration [g/L] | Übersättigung |
|---|---|---|---|---|
| Al(NO₃)₃*9 H₂O | 101063 | 419 | 2097 | 5 |
| Ba(NO₃)₂ | 101729 | 90 | 4333 | 48,1 |
| Cu(NO₃)₂*3H₂O | 102753 | 2670 | 4355 | 1,6 |
| LiNO₃ | 105653 | 522 | 2600 | 4,9 |
| Mg(NO₃)₂*6H₂O | 105855 | 420 | 3333 | 7,9 |
| NaNO₃ | 106546 | 874 | 4333 | 4,9 |
| Zn(NO₃)₂*6H₂O | 108836 | 1843 | 6500 | 3,5 |

### Versuchsansatze

1. 200 mg Muskovit + 65 g Ba(NO₃)₂ + 15 ml H₂O
   Reaktionstemperatur 170 °C, Reaktionsdauer: 72 Std.
2. 200 mg Muskovit + 65 g Cu(NO₃)₂ x 3H₂O + 15 ml H₂O
   Reaktionstemperatur: 130 °C, Reaktionsdauer: 48 Std.
3. 200 mg Muskovit + 52 g LiNO₃ + 20 ml H₂O
   Reaktionstemperatur: 130 °C, Reaktionsdauer: 48 Std.
4. 200 mg Muskovit + 50 g Mg(NO₃)₂ x 6H₂O + 15 ml H₂O
   Reaktionstemperatur: 190 °C, Reaktionsdauer: 60 Std.
5. 200-mg Muskovit + 65g NaNO₃ + 15 mL H₂O
   Reaktionstemperatur: 170 °C, Reaktionsdauer: 96 Std.
6. 200 mg Muskovit + 65 g Zn(NO₃)₂ x 6H₂O + 10 ml H₂O
   Reaktionstemperatur: 170 °C, Reaktionsdauer: 60 Std..
7. 200 mg Muskovit + 65 g Al(NO₃)₃ x 9 H₂O + 31 ml H₂O
   Reaktionstemperatur: 150 °C, Reaktionsdauer: 72 Std.

Die gewaschenen und getrockneten Reaktionsprodukte wurden dann ohne weitere Vorbehandlungen mittels Röntgendiffraktometrie und Elektronenmikroskopie untersucht sowie deren spezifische Oberflächen ermittelt.

### Ergebnisse

Die charakteristischste Eigenschaft von 2:1-Schichtsilikaten ist deren sandwichartiger Aufbau aus zwei eckenverknüpften [SiO₄]-Tetraederschichten und dazwischen einer über die Kanten verknüpften [Al(O/OH)₆]-Oktaederschicht ("TOT"). Durch teilweise Substitution der zentralen Tetraederatome (Silizium) durch Aluminium weisen die TOT-Schichtpakete eine negative Ladung auf. Deren Ladungsausgleich erfolgt über den Einbau von großen einwertigen Zwischenschichtkationen (im allg. Kalium und Natrium), über die die Schichten koordinativ gebunden sind (Bailey et al. Kapitel 1 in Micas, Reviews in Mineralogy, Vol. 13, S. 1 - 12, 1984; Jasmund et al. in Tonminerale und Tone, Steinkopf Verlag Darmstadt, S. 490, 1993; Reynolds et al. in X-ray diffraction and the identification and analysis of clay minerals, Sec. Edition, Oxford University Press 1997). Durch die Behandlung erfolgt ein Austausch von Kalium und Natrium durch die mehrwertigen Kationen. Dies führt zwar zum Aufweiten der Schichtstapel in Richtung der parallel zu (001) in Richtung der kristallographischen c-Achse, jedoch wird die eigentliche Struktur der Schichtpakete dadurch nicht beeinflusst.

Ferner ist bei Schichtsilikaten häufig ein Wechsel von Stapeln mit unterschiedlichen Schicht-Abständen zu beobachten (sog. mixed-layer oder Wechsellagerungsminerale). Diese Minerale ergeben ein Röntgendiffraktogramm mit einer Serie von Basisreflexen, wobei sich der d-Wert des ersten Basisreflexes aus der Summierung der Basisabstände beider Schichttypen ergibt.

Das Mineral Rectorit stellt ein Beispiel hierfür dar. Bei Rectorit handelt es sich um ein regelmäßiges Wechsellagerungsmineral, quasi bestehend aus Muskovit und Montmorillonit Paketen, dessen erster Basisreflex bei ∼ 24 Å liegt, der sich aus dem Basisreflex von Muskovit (∼ 10 Å) und Montmorillonit (12-15 Å) zusammensetzt. Da ähnliche Reflexe bei erfindungsgemäß behandeltem Muskovit ebenfalls auftreten und im selben Bereich liegen, beispielsweise für Magnesiumnitrat-behandetem Muskovit bei 23.6, 11.8 und 11.3 Å, kann der so veränderte Muskovit mit der Struktur des Rectorit verglichen werden (vgl. Tab. 1).

Die Modifizierung des Muskovits kann deshalb tatsächlich als eine Verzerrung der Elementarzeile, aber nicht als neu- oder umgebildete Struktur bezeichnet werden. Daher kann man von einer "Rectorit-artigen oder -vergleichbaren Struktur" sprechen.

Die Behandlung des Muskovits im Autoklaven führt bei allen eingesetzten zwei- oder mehrwertigen Metallkationsalzen zu einer deutlichen Delamination des Produkts.

Dies wird zum einen durch eine Verschiebung des Röntgen-Basis-Reflexes des Muskovit (von 10.1 Å nach 9.9 Å) und durch die Neubildung von Reflexen verdeutlicht, die für die Bildung eines stark delaminierten Wechsellagerungsminerals sprechen (Bildung einer Rectorit-artigen Struktur).

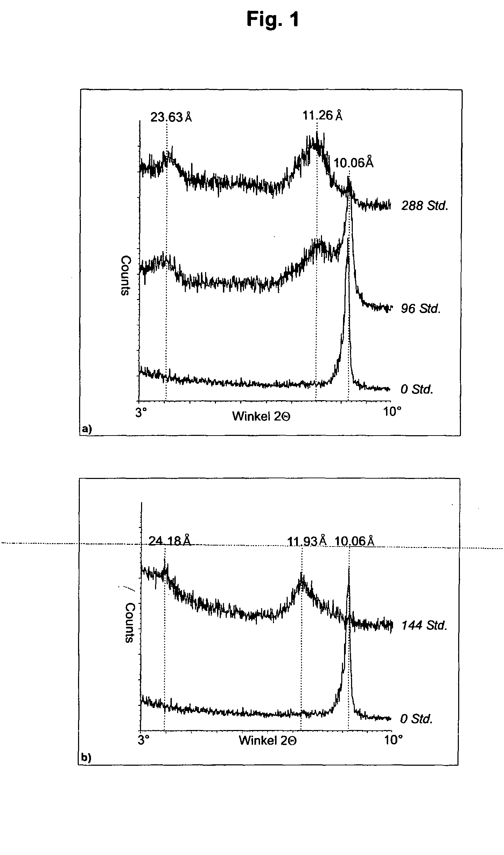

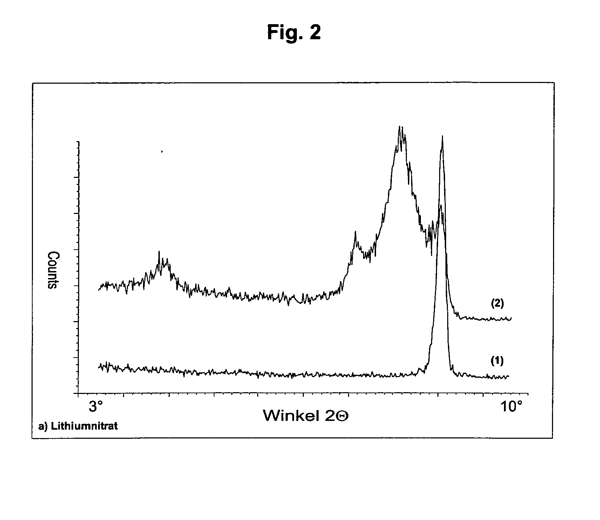

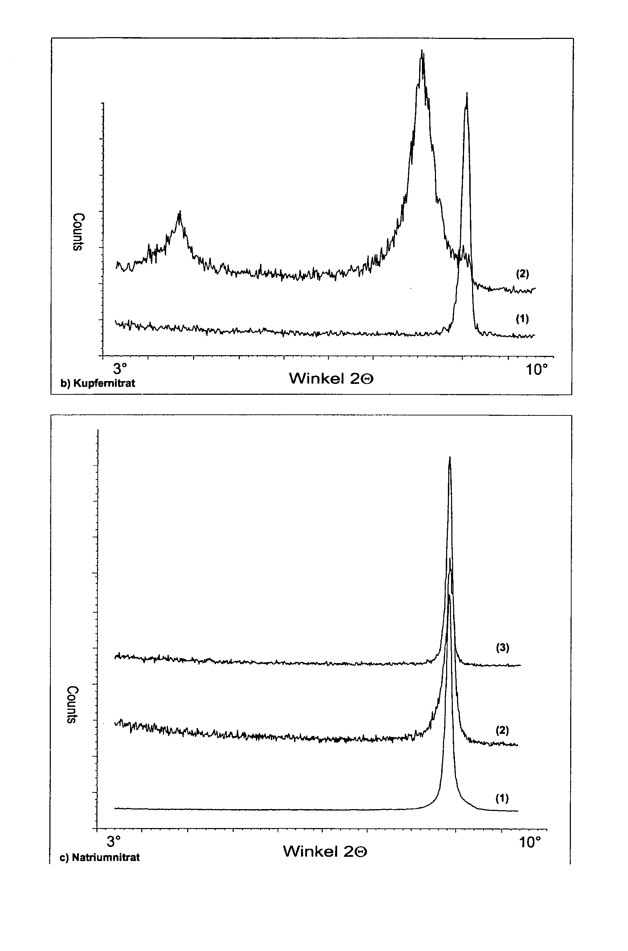

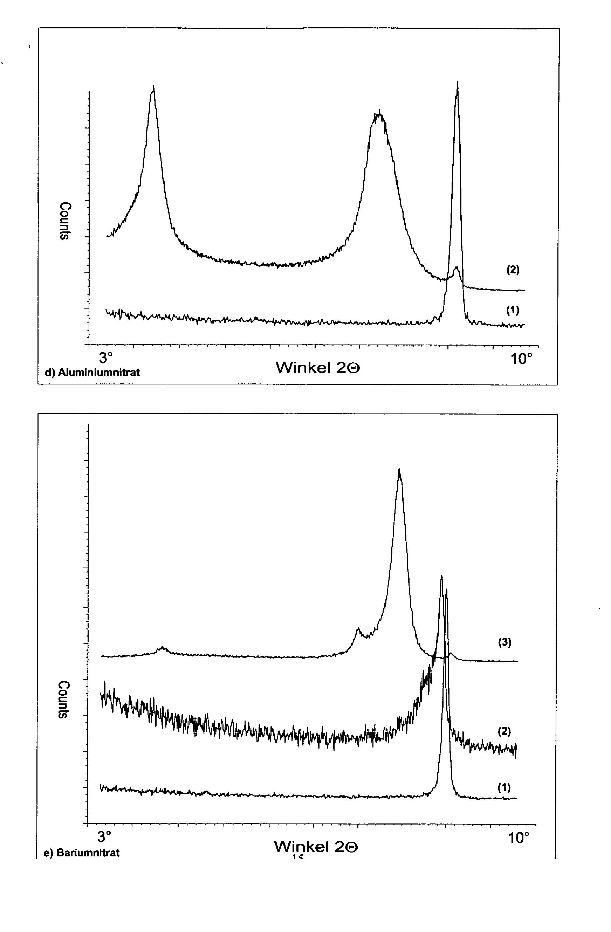

In den Figuren 1 und 2 sind Röntgendiffraktogramme der behandelten Muskovitproben dargestellt. Aufgetragen sind die Zählrate gegenüber dem Winkel 2⊖ zwischen 3 und 10°.

In den Figuren 1 a und 1 b sind die Veränderungen des Ausgangsmaterials im Verlauf der Reaktion durch die Überlagerung jeweils nach bestimmten Zeiten aufgenommener Reflexe dargestellt.

In den Figuren 2a - e stellen die jeweils mit (1) gekennzeichneten Linien das Ausgangsmaterial dar. Die mit (2) gekennzeichneten Linien stellen dagegen den behandelten Muskovit dar.

Besonders die Aufnahmen der mit Mg-Nitrat und Zn-Nitrat behandelten Muskovite zeigen neue charakteristische Reflexe bei 11.3, 11.8 und 23.6 Å (Fig. 1a und b).

Die Verwendung von Lithiumsalz in Gestalt eines Nitrats führte erwartungsgemäß zur Delamination (positive Referenzprobe). Dies wird in Fig. 2a deutlich durch die Neubildung von Reflexen bei 22,6, 12,3 und 11,3 Å und einem Verschwinden des (001)-Basisreflexes.

Auch mit Cu- und AI-Nitrat durchgeführte Versuche zeigen eine solche deutliche "Aufspaltung" des ursprünglichen 001-Reflexes (Fig. 2b und 2d). Neue Reflexe werden bei 21,8 und 10,9 bzw. 23,5 und 11,7 Å gebildet.

Lediglich die Versuche mit NaNO₃-Lösungen ergeben erwartungsgemäß keine Veränderung der Röntgendiffraktogramme (vgl. Fig. 2c). Auch die Mischung von Natrium mit Lithium (Linie (3) in Fig. 2c) erzielt keine Delamination. Es wird immer nur der Basisreflex beobachtet.

Die Versuche mit Ba(NO₃)₂ führten zunächst ebenfalls nicht zur Aufspaltung des Ausgangspeaks (Linien (1) und (2) in Fig. 2e). Der Einsatz eines Gemisches aus Li- und Ba-Nitrat führte dann auch hier zu einer "Verschiebung" der Reflexe (Fig. 2e, Linie (3)).

Eine detaillierte Auflistung der neugebildeten Reflexe im Bereich 3° - 10° 2⊖ stellt Tabelle 1 dar:

| Kation | T | Reaktion | XRD-Reflexe [Å] |
|---|---|---|---|
| AI | 150 °C | + | 23.5,11.7,9.9 |
| Ba | 170°C | (-) | leichte Peakverschiebung (fraglich) 10.5,10.1 |
| Li/Ba | 170 °C | + | 21.9, 12.1, 11.1 |
| Cu | 130 °C | + | 22.4, 11.2, 10.9, 10.6 |
| Li | 130 °C | + | 22.6,12.3, 11.3 |
| Mg | 190 °C | + | 23.6, 11.8, 11.3,9.9 |
| Zn | 170 °C | + | 24.5, 11.9, 11.4, 10.7 |
| Na | 170 °C | - | - |
| Li/Na | 170°C - | - | - |
| +: Änderungen der Reflexpositionen im Diffraktogramm, | | | |
| -: Keine Veränderung des Diffraktogramms. | | | |

Die starke Abnahme der Stapeldicke, also eine zunehmende Delamination des behandelten Muskovits wird sowohl durch die mit zunehmender Temperatur und Reaktionsdauer deutlich ansteigenden Halbwertsbreiten der Reflexe, als auch die gleichzeitige Abnahme der Peakintensitäten angezeigt.

Elektronenmikroskopische Aufnahmen verdeutlichten die starken Veränderungen der Kristallmorphologie der behandelten Muskovite bei der Delamination. Dabei werden die Partikel zum Teil nicht nur parallel zu den Schichten gespalten, sondern es erfolgt zudem die Bildung von Bruchflächen in den Kristallen was zur intensiven Kornverkleinerung führt. Außerdem kommt es häufig zum Auffächern der Randbereiche, welche sich dadurch (ähnlich wie Halloysit oder hydratisierter Kaolinit) aufrollen. Das Auf- und Abbrechen dieser Bereiche trägt ebenfalls zur Kornverkleinerung bei.

Die Untersuchung der Veränderungen der Korngrößen der behandelten Muskovite erfolgte im Elektronenmikroskop durch das Ausmessen der Partikel in Streupräparaten, vergleichbar dem in der Sedimentpetrographie eingesetzten Verfahren des Point-Counting. Dies ergab bei allen behandelten Muskoviten eine deutliche Abnahme der Korndurchmesser. Während beim Ausgangsmuskovit der Mittlere Durchmesser (Median) zwischen 90 und 100 µm liegt, verringert sich dieser bei mit Magnesiumnitrat behandeltem Muskovit auf 60 - 70 µm, bei mit Zinknitrat behandelte Proben auf den Korngrößenbereich 30 - 40 µm, bei mit Kupfernitrat behandeltem Muskovit auf 40 - 50 µm und bei Lithiumnitrat auf den Bereich 20 - 30 µm.

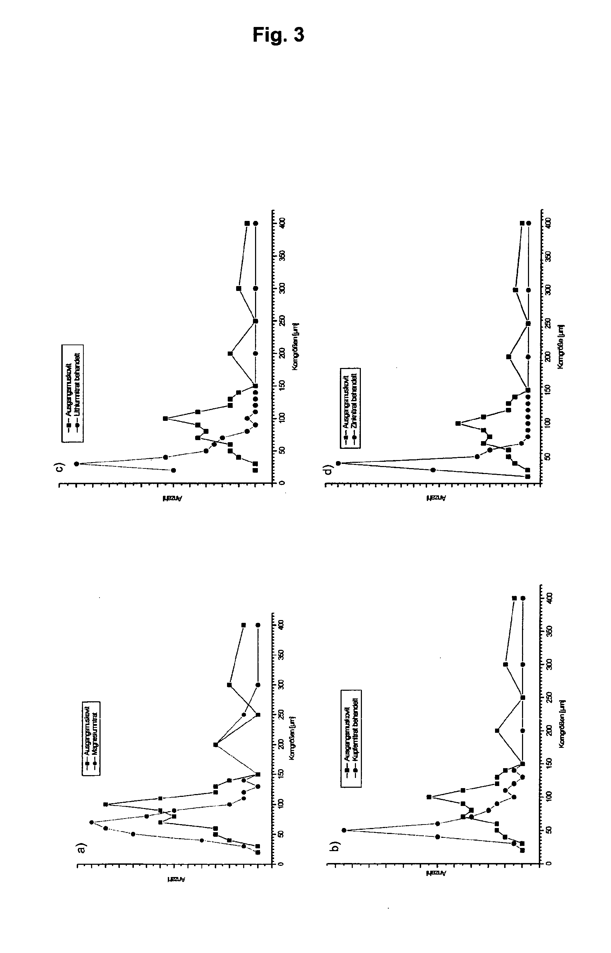

Darüber hinaus kommt es bei mit allen Salzen behandeltem Muskovit zu einer sehr guten unimodalen Sortierung der Partikel, dem eine schlechte Sortierung des Ausgangsmaterials mit einem Hauptmaximum bei 100 µm und einem kleineren Maximum bei 70 µm sowie teilweise sehr großen Partikeln (> 250 µm) gegenüber steht (vgl. Fig. 3a - d).

**Tab. 2:**

| Veränderung der mittleren Korngröße durch die Nitratbehandlung | |
|---|---|
| Muskovit | Mittlere Korngröße [µm] |
| Vor der Behandlung | 90 - 100 |
| Cu-Kation behandeltes | 40 - 50 |
| Li-Kation behandeltes | 20 - 30 |
| Mg-Kation behandeltes | 60 - 70 |
| Zn-Kation behandeltes | 30 - 40 |

Zusätzlich wurde an mit Lithiumnitrat- und Magnesiumnitrat behandelten Proben mittels Atomic Force Microscopy eine Untersuchung der Schichtdicken durchgeführt. Diese ergab eine Verringerung der Stapeldicken auf 30 nm für mit Magnesiumnitrat-behandeltem Muskovit und bis zu 10 nm für mit Lithiumnitrat behandelten Proben. Die Stapeldicken des Ausgangsmaterials waren so groß, dass keine verwertbaren Aufnahmen gemacht werden konnten.

Auch Messungen der Spezifischen Oberflächen zeigen deutlich die mit der Delamination einhergehende Vergrößerung der spezifischen Oberfläche. Am Beispiel des mit Mg- und Li-Nitrat behandelten Muskovits zeigt sich die starke Zunahme der äußeren Oberflächen um 400% bis 2000% (Tab. 3). Diese großen Oberflächen bedeuten eine Verringerung der Stapelmächtigkeiten auf wenige Schichtstapel. Man erkennt, dass mit der erfindungsgemäßen Methode bereits nach kurzer Zeit hohe spezifische Oberflächenzunahmen erzielt werden.

**Tab. 3:**

| Veränderung der spezifischen Oberfläche in Abhängigkeit von der Behandlungsdauer | | |
|---|---|---|
| Reaktionsdauer [h] | Spez. Oberfläche [m²/g] | |
| | LiNO₃ | Mg(NO₃)₂ |
| 0 | 8,4 | 8,4 |
| 8 | 10,9 | 37,47 |
| 16 | 14,7 | 37,0 |
| 24 | 12,9 | 32,0 |

## Patentansprüche

1. Verfahren zur chemischen Delamination von Glimmer, wobei der Glimmer mit mindestens einem Salz mindestens eines zwei- oder mehrwertigen Metallkations bei einer Temperatur > 100 °C und einem Druck > 10⁵ Pa umgesetzt wird.

2. Verfahren nach Anspruch 1, **dadurch gekennzeichnet, dass** der Glimmer aus der Gruppe bestehend aus Muskovit, Paragonit, Margarit ausgewählt wird.

3. Verfahren nach Anspruch 1 oder 2, **dadurch gekennzeichnet, dass** das Metallkation aus der Gruppe bestehend aus Aluminium, Kupfer, Magnesium, Zink, Barium ausgewählt wird.

4. Verfahren nach einem der vorhergehenden Ansprüche, **dadurch gekennzeichnet, dass** das Metallkationsalz als wäßrige Lösung eingesetzt wird.

5. Verfahren nach einem der vorhergehenden Ansprüche, **dadurch gekennzeichnet, dass** das Metallkationsalz als übersättigte wässrige Lösung eingesetzt wird.

6. Verfahren nach Anspruch 5, **dadurch gekennzeichnet, dass** die übersättigte wässrige Lösung 1,6 bis 48,1-fach übersättigt ist.

7. Verfahren nach einem der vorhergehenden Ansprüche, **dadurch gekennzeichnet, dass** das Metallkationsalz ein Nitrat ist.

8. Verfahren nach einem der vorhergehenden Ansprüche, **dadurch gekennzeichnet, dass** die Temperatur bei der Umsetzung < 300 °C ist.

9. Verfahren nach einem der vorhergehenden Ansprüche, **dadurch gekennzeichnet, dass** die Temperatur bei der Umsetzung zwischen 130 und 190 °C liegt.

10. Verfahren nach einem der vorhergehenden Ansprüche, **dadurch gekennzeichnet, dass** der Druck oder Umsetzung < 20x10⁵ Pa ist.

11. Verfahren nach einem der vorhergehenden Ansprüche, **dadurch gekennzeichnet, dass** es im Autoklaven durchgeführt wird.

12. Chemisch delaminierter Glimmer erhältlich nach einem Verfahren der Ansprüche 1 bis 11.

13. Chemisch delaminierter Glimmer nach Anspruch 12, der eine mittlere Korngröße von 30 bis 70 µm aufweist.

14. Chemisch delaminierter Glimmer nach Anspruch 12 oder 13, wobei es sich um Muskovit handelt.
